# EUROPEAN PATENT APPLICATION

(11) **EP 2 803 821 A1**
(43) Date of publication of application: **19.11.2014**
(21) Application number: 13167446.7
(22) Date of filing: 13.05.2013
(51) Int. Cl.: F01D 5/22, F01D 5/24, F01D 11/00

(54) **Blade device, blade system, and corresponding method of manufacturing a blade system**

(71) Applicant: Siemens Aktiengesellschaft, 80333 München (DE)
(72) Inventor: Batt, Stephen, LN4 2DZ Lincoln (GB); McKenna, Mike, NG241GL Newark (GB)
(74) Representative: Maier, Daniel Oliver

(57) **Abstract**

The present invention relates to a blade device (100) for a gas turbine comprising a rotor shaft (101) having an axial direction (102), a radial direction (103) and a circumferential direction (104). The blade device (100) comprises a shroud (110) and an airfoil (105) extending from the shroud (110) along the radial direction (103), wherein the shroud (110) comprises at a circumferential end (111) a wedge face (201). The wedge face (201) comprises a recess (202) extending with a component along the axial direction (102). A damping wire (401) is arranged within the recess (202) such that the damping wire (401) is adapted for contacting the shroud (110) and a further wedge face (403) of a further shroud (310) of a further blade device (300) which is arranged adjacent to the shroud (110) along the circumferential direction (104). Corresponding blade system and method of manufacturing a blade system are also provided.

## Description

### Field of invention

The present invention relates to a blade device for a gas turbine and to a blade system for a gas turbine comprising the blade device. Furthermore, the present invention relates to a method of manufacturing the blade system for a gas turbine.

### Art background

Turbine blades are subjected to dynamic loading of a blade airfoil leading to harmful vibrations and high cycle fatigue. This is particularly the case for so-called long slender blades which are more prone to their natural resonance interacting with the frequency of loading within the running speed range of the turbine. Traditionally, this problem may be solved by providing means of locking neighbouring blades together at their outer shroud surfaces and hence increasing the frequency of natural resonance of the blade beyond the interactions during the turbine's normal speed range. These blade shrouds have an interlock feature which has an angle face which forces the blade to be assembled as a set. Also, as the blades are assembled, a twist may be induced in the blade airfoil which requires a high level of force for the blade assembly. For these reasons, a single blade cannot be withdrawn from a rotor (i.e. a rotor disk) without disturbing the full set of circumferentially arranged blades, which leads to restrictions for on-site replacement.

Hence, conventional blades cannot be separately serviced on-site. The complete bladed disk has to be removed and typically transported to a service center for removal of all blades before individual blades can be replaced, often using a purpose made tool or fixture. On large turbines, this is logistically difficult, expensive and time-consuming.

DE 10 2010 003 594 A1 describes a blade shroud arrangement, wherein the gap between neighbouring blade shrouds is filled with a memory metal element for damping the blade vibrations due to a geometry change caused by a temperature change due to friction between the blades.

GB 623,525 discloses a vibration damper for blades of turbines and compressors. Sockets connecting two ends of adjacent turbine blade shrouds in order to reduce vibration.

US 3,185,441 discloses a shroud-blading for turbines or compressors. Shroud blades of respective adjacent blades contact each other and thereby reduce the blade vibrations.

US 5,201,850 discloses rotor tip shroud dampers including damper wires. A damper wire runs along a circumferential direction and thereby passing the adjacent shrouds of the blades.

US 4,722,668 discloses a device for damping blade vibrations in turbo-machines, wherein a damper wire runs along a circumferential direction and thereby connects the adjacent turbine blades for reducing a vibration between the blades.

WO 2007/000326 A1 discloses a turbine rotor and a method for the production of the turbine rotor. A damper wire is fixed to adjacent blade shrouds and runs along the circumferential direction.

US 1,304,793 discloses a turbine bucket, wherein the tip end of adjacent rotor blades comprises shrouds which are interlocked with respect to each other.

US 2,510,734 discloses a turbine rotor with a plurality of turbine blades, wherein the shrouds of adjacent turbine blades are interlocked with respect to each other.

### Summary of the Invention

It may be an objective of the present invention to provide a blade assembly of a turbine rotor which has improved maintenance properties.

This object may be solved by a blade device for a gas turbine, by a blade system for a gas turbine and by a method of manufacturing a blade system for a gas turbine.

According to a first aspect of the present invention, a blade device for a gas turbine is presented. The gas turbine comprises a rotor shaft having an axial direction, a radial direction and a circumferential direction.

The blade device comprises a shroud and an airfoil extending from the shroud along the radial direction. The shroud comprises at a circumferential end a wedge face (i.e. a side surface). The wedge face comprises a recess extending at least with a component along this axial direction. Furthermore, the blade device comprises a damping wire, wherein the damping is arranged within the recess such that the damping wire is adapted for contacting the shroud and a further shroud of a further blade device which is arranged adjacent to the shroud along the circumferential direction.

Hence, according to a further aspect of the present invention, a blade system for a gas turbine is presented. The blade system comprises the blade system as described above. Furthermore, the blade system comprises a further blade device comprising the further shroud and a further airfoil extending from the further shroud along the radial direction. The further shroud comprises at a further circumferential end a further wedge face (side surface). The further shroud is arranged adjacent to the shroud along the circumferential direction such that the wedge face and the further wedge face faces each other. The damping wire is arranged within the recess such that the damping wire contacts the shroud and the further wedge face of the further shroud.

According to a further aspect of the present invention, a method of manufacturing a blade system for a gas turbine is presented. A blade device of a blade system comprises a shroud and an airfoil extending from the shroud along the radial direction. The shroud comprises at a circumferential end a wedge face. The wedge face comprises a recess extending with a component along the axial direction. A blade device of the blade system comprises a further shroud and a further airfoil extending from the further shroud along the radial direction. The further shroud comprises at a further circumferential end a further wedge face. According to the method, the shroud is arranged adjacent to the shroud along the circumferential direction such that the wedge face and the further wedge face face each other. Furthermore, according to the method, a damping wire is arranged within the recess such that the damping wire contacts the shroud and the further wedge face of the further shroud.

The rotor shaft of the gas turbine defines the axial direction, the radial direction and the circumferential direction. The axial direction is parallel with the rotary axis and the centre axis of the rotor shaft. The circumferential direction is defined as the direction along the circumference of the rotor shaft and the axial direction, respectively. A tangent of the circumferential direction is perpendicular to the axial direction and the radial direction. The radial direction defines a direction running through the center point of the rotor shaft and hence crosses the rotary axis. The radial direction is perpendicular to the axial direction and to the circumferential direction (i.e. perpendicular to the tangent of the circumferential direction).

Generally, the airfoil of the blade device comprises a root which is fixed to the rotor shaft. At an opposed end of the airfoil, the shroud is arranged. The shroud is a plate-like element which may provide a normally contact free sealing with housing parts of the gas turbine. When the gas turbine components are assembled for the first time parts of the shroud may contact and cut into housing parts as to create a minimal clearance during further use. The blade device rotates together with the rotor shaft around the rotary axis. The blade device is driven by the working fluid of the gas turbine.

Around the circumferential direction, a plurality of blade devices is arranged one after another along the circumferential direction. Each blade device comprises respective shrouds which are arranged one after another along the circumferential direction. It is an aim to reduce the gaps between the respective shroud and to damp the contact between the shrouds which is caused e.g. due to vibrations.

Hence, by the approach of the present invention, a damping wire is arranged between two adjacent shrouds. The damping wire is located in the recess of one shroud and contacts the adjacent shroud, such that the gap between the two adjacent shrouds is closed and the vibration between the two shrouds is reduced.

The recess is formed in a wedge face of a shroud. The wedge face is the end face or side surface at a circumferential end of the shroud. The extending direction of the wedge face between an upstream end and a downstream end of the shroud may be parallel to an axial direction or may comprise an angle to the axial direction. However, a normal of the wedge face may be parallel to a normal of the further wedge face of an adjacent further shroud.

The upstream end and the downstream end of a component, such as the shroud, are defined with respect the streaming direction of a working fluid of the gas turbine. Hence, a windward side of the component comprises the upstream end and the lee side of the component comprises the downstream end.

The recess may be formed as a groove which extends along the wedge face and comprises a component along the axial direction. In other words, the recess runs from an upstream end of the wedge face to a downstream end of the wedge face.

The wedge face and the further wedge faces may be plane, non-curved faces and may be parallel and thereby matching an angle of the root and its platform. Hence, the blade devices may be moved for assembling or disassembling purposes along the axial direction with respect to each other without locking each other. The shape of the adjacent shrouds and in particular the orientation and the shape of the adjacent wedge faces are formed with respect to each other in such a way that during mounting and dismounting of one of the two adjacent blades, the two blades do not block each other. In particular, a small gap is provided between the wedge face and the further wedge face of the two adjacent blade devices. This gap is sealed by the damping wire which is arranged within the recess of the wedge face.

The damping wire may be formed of an elastic material. For example, the damping wire may be made of metal and may hence form a metallic wire. The damping wire is introduced within the recess (slot, groove) of the wedge face and bears and contacts against a further plane face of the further wedge face of a neighboring blade device.

Typically, the blade system comprises a predefined rotating direction around the axial direction. The wedge face with the recess may be formed at the back side of the shroud. For example, a front side of the shroud may be a front side with respect to the rotating direction and the back side is a back side with respect to the rotation direction. Hence, due to the inertia of the damping wire and due to the centrifugal forces during rotation of the blade device, the damping wire is forced to leave the recess formed within the back side wedge face and is for this reason pressed and bears against a front side wedge face (further wedge face) of the further shroud of a further blade device which is arranged adjacent to the shroud.

Hence, due to the rotation of the blade device in an operating state of the gas turbine, the damping wire damps a contact between two adjacent shrouds and seals a gap between the two adjacent shrouds. Hence, it is not necessary to interpose any sealing means by a press-fitting which complicate an exchange of a single turbine blade device. If the gas turbine stands still, the damping wire is not pressed against the adjacent further wedge face such that no press-fitting between the two adjacent shrouds do exist. Hence, an easy exchangeability of single blade devices is achieved without reducing the sealing and damping properties between two adjacent shrouds. Hence, single blade devices or blade devices may be maintained and serviced without dismounting the complete turbine blade disk, to which the single blade devices are attached. Hence, an on-site maintenance of the single blade devices is possible.

Hence, according to an exemplary embodiment, the recess is formed such that the clearance fit connection with a damping wire is generated. In other words, the damping wire is movably arranged inside the recess, such that the damping wire is pressed against the adjacent further wedge face under operation of the gas turbine. Alternatively, in a further exemplary embodiment, the recess is formed such that the press-fit connection with the damping wire is generated. For example, if the damping wire comprises elastic properties, also an easy exchangeability of single blade devices is possible although the damping wire is fixed with a press-fit connection within the recess.

According to a further exemplary embodiment, the recess comprises an inclining side surface which comprises a normal which is non-parallel with the radial direction such that the damping wire changes a radial distance to the rotary axis and is moved along the inclining side surface.

In particular, the inclining side surface of the recess is the radially outer side surface of the recess. In particular, the normal of the inclining side surface comprises an angle to a force direction of the centrifugal force. The centrifugal force is in particular parallel to the radial direction. Hence, if a centrifugal force acts onto the damping wire under operation of the gas turbine, the damping wire is forced to move along the inclining side surface from a radially inner position of the recess to a radially outer position of the recess. At the outer surface of the wedge face, the inclining side surface of the recess comprises a larger distance to the rotary axis than at an inner end of the inclining side surface which is located within the recess. Hence, if the centrifugal force acts onto the damping wire, the damping wire is forced outside of the recess along the inclining side surface and hence contacts the adjacent further wedge face.

According to a further exemplary embodiment, the blade device and the further blade device are arranged with respect to each other such that the clearing (gap) between the shroud (i.e. the wedge face) and the further shroud (i.e. the further wedge face) exists. The damping wire is arranged within the recess and between the shroud and the further shroud, such that the clearance (gap) is covered by the damping wire.

According to a further exemplary embodiment, the further wedge face comprises a plane surface onto which the damping wire is abuttable.

According to a further exemplary embodiment, the further wedge face comprises a further recess, wherein the damping wire is arranged within the recess and the further recess. The further recess may be formed with the same features as the recess described above for the shroud. The further recess may comprise a further inclining side surface which may be a radially outer inclining side surface of the further recess. The normal of the further inclining side surface may be non-parallel to the force direction of the centrifugal force.

The further inclining side surface of the further recess is the further radially outer side surface of the further recess. In particular, the further normal of the further inclining side surface comprises an angle to a force direction of the centrifugal force. Hence, if a centrifugal force acts onto the damping wire under operation of the gas turbine, the damping wire is forced to move along the further inclining side surface from a radially inner position of the further recess to a radially outer position of the further recess. At the further outer surface of the further wedge face, the further inclining side surface of the further recess comprises a larger distance to the rotary axis than at a further inner end of the further inclining side surface which is located within the further recess. Hence, if the centrifugal force acts onto the damping wire, the damping wire is forced to the outside of the further recess along the further inclining side surface and hence contacts the adjacent wedge face.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a blade device for a gas turbine according to an exemplary embodiment of the present invention;
Fig. 2 shows an enlarged view of a shroud of a blade device for a gas turbine according to an exemplary embodiment of the present invention;
Fig. 3 shows a blade system comprising two blade devices according to an exemplary embodiment of the present invention; and
Fig. 4 shows an enlarged view of a contact region between a shroud and a further shroud according to an exemplary embodiment of the present invention.

### Detailed Description

The illustrations in the drawings are schematic. It is noted that in different figures similar or identical elements are provided with the same reference signs.

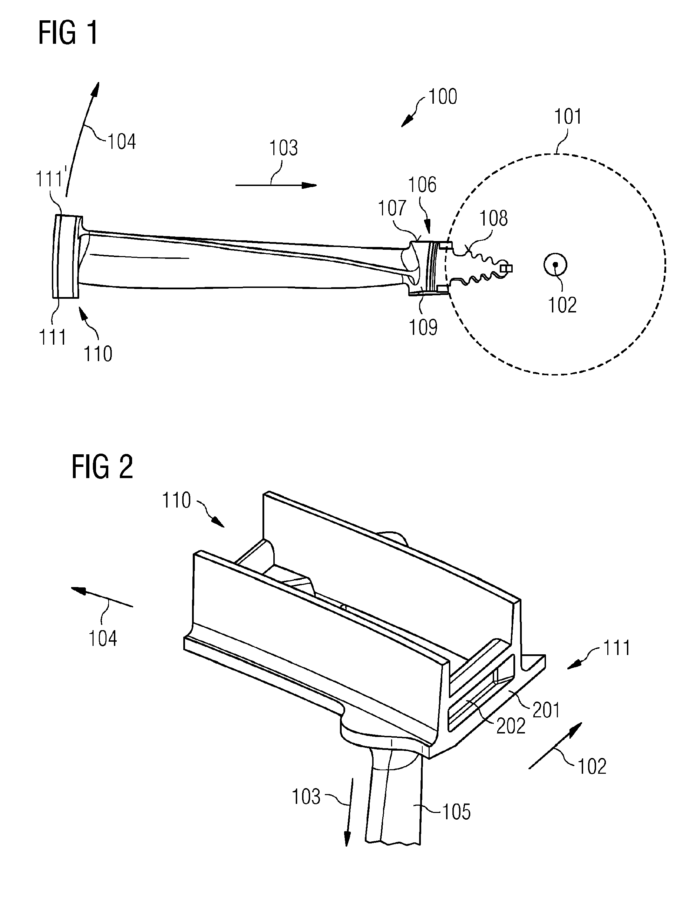

Fig. 1 shows a blade device 100 for a gas turbine. For a better understanding, the extensions and orientations of the features of the blade device 100 are described with respect to predefined directions of a rotor shaft 101 (indicated by dotted lines) of the gas turbine. The rotor shaft 101 comprises an axial direction 102 which is parallel to a rotary axis of the rotor shaft 101. Furthermore, a radial direction 103 is described which directs to the center axis (rotary shaft) of the rotor shaft 101. The circumferential direction 104 is perpendicular to the axial direction 102 and the radial direction 103. Along the circumferential direction 104, a plurality of blade devices 100 may be arranged one after another.

The blade device 100 comprises a shroud 110 and a blade root 106. An airfoil 105 extends along the radial direction 103 between the shroud 110 and the blade root 106. The airfoil 105 comprises an aerodynamic profile comprising an upstream end (airfoil leading edge) and a downstream end (airfoil trailing edge). The blade device 100 is mounted to a rotor disk (not shown) which is mounted to the rotor shaft 101.

The shroud 110 comprises a front side end 111' and a back side end 111. The circumferential end 111' is the front side with respect to the rotating direction (shown with the arrow of the circumferential direction 103) and the back side end is a back side end opposed to the front side end with respect to the rotation direction.

At the back circumferential end 111 a wedge face 201 (see Fig. 2) is formed. The arrow of the circumferential direction 104 may describe also a rotary direction of the respective blade device 100 around the rotary axis (axial direction 102).

Fig. 2 shows a detailed view of the wedge face 201 which is located at a back circumferential end 111 of the shroud 110. The wedge face 201 comprises a recess 202 extending with a component along the axial direction 102. In particular, the recess 202 extends between an axial upstream end and a radial downstream end of the shroud 110.

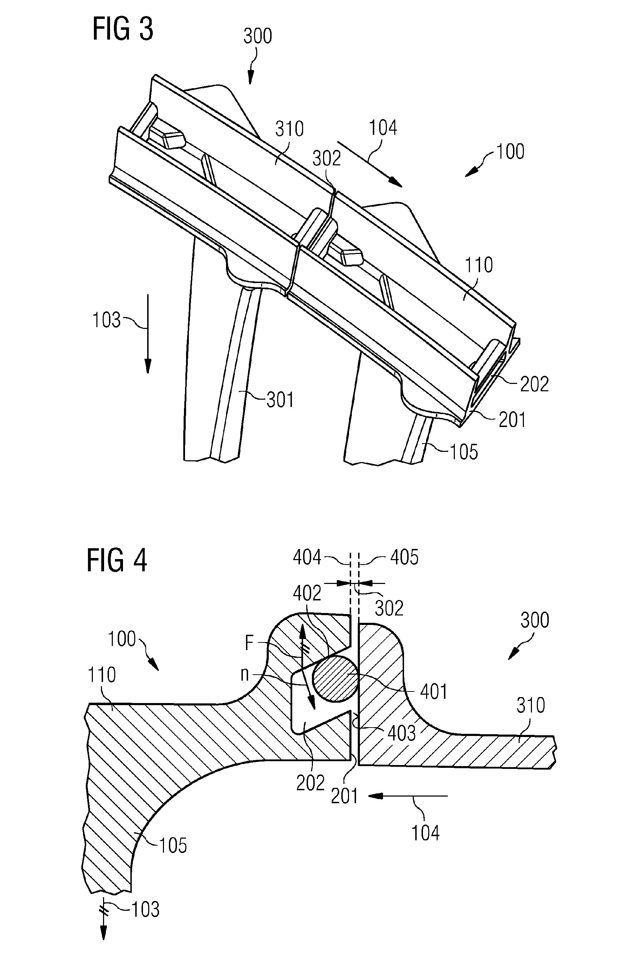

A damping wire 401 (see Fig. 4) is arranged within the recess 202 such that the damping wire 401 is adapted for contacting the shroud 110 and a further shroud 310 (see Fig. 3) of a further blade device 300 (see Fig. 3) which is arranged adjacent to the shroud 110 along the circumferential direction 104. The recess 202 is formed such that a press-fit connection with the damping wire 401 is generated.

The damping wire 401 may be fixed by a press-fit connection within the recess 202 and a part of the damping wire 401 protrudes from the surface of the wedge face 201.

Alternatively, the recess 202 is formed larger than the damping wire 401, such that a clearance fit connection with the damping wire 401 is generated. In particular, the width of the recess 202 may be larger than a diameter of the damping wire 401, for example.

Furthermore, the wedge face 201 is located within a plane 404 (see Fig.4) which comprises a normal. The plane 404 and the normal, respectively, are formed parallel with a further plane 405 (see Fig.4) of an adjacent further wedge face 403 (see Fig.4). Hence, during an assembling of the blade device 100, the blade device 100 may be moved e.g. along the axial direction 102 with respect to an adjacent further blade device 300 (see Fig. 3), wherein the parallel wedge faces 201, 403 do not block each other.

In order to further improve the easy assembling of blade root devices 100, 300, blade root wedge faces 107, 108 (see Fig. 1) of the blade root 106 are located within a blade root plane which comprises a blade root normal. The blade root plane may also be formed parallel with a further blade root plane of an adjacent further blade root wedge face.

The blade root 106 may comprise a platform 109 which comprises a platform wedge face 107. Furthermore, the blade root comprises a coupling section with which the blade root 106 is coupled into a respective slot of the rotor shaft 101.

The platform wedge face 107 may be located within the blade root plane. The blade root plane may also be formed parallel with the further blade root plane of an adjacent further blade root wedge face.

Accordingly, a coupling section wedge face 108 of the coupling section may be located within a coupling section wedge face plane. The coupling section wedge face plane may be formed parallel with a further blade root plane of an adjacent further coupling section wedge face of an adjacent further blade device 300.

Specifically, the blade root plane of the platform wedge face 107 and/or the coupling section wedge face 108 may be parallel to the plane 404. Moreover, the platform wedge face 107 may be arranged within the plane 404, such that the wedge face 201 and the platform wedge face 107 are located within the same plane 405.

Hence, the blade devices 100, 300 may slide with respect to each other during assembling along a respective slot within the rotor shaft 101, wherein due to the parallel design of the respective wedge faces 107, 108, 201, 403 between adjacent blade devices 100, 300 do not block each other during assembling.

Fig. 3 shows a blade system for a gas turbine. The blade system comprises a further blade device 300 comprising a further shroud 310 and a further airfoil 301 extending from the further shroud 310 along the radial direction 103. The further shroud 310 comprises at a further circumferential end a further wedge face 403. Adjacent to the further blade device 300, a blade device 100 as described in Fig. 1 and Fig. 2 is arranged. The further shroud 310 and the shroud 110 are arranged adjacent to each other along the circumferential direction 104 such that the wedge face 201 and the further wedge face (403) face each other. The damping wire 401 is arranged within the recess 202 such that the damping wire 401 contacts the shroud 110 and the further wedge face 403 of the further shroud 310. A clearance 302 between the wedge face 106 and the further wedge face 403 exists.

Fig. 4 shows a more detailed view of the exemplary embodiment shown in Fig. 3. The blade device 100 and the further blade device 300 are arranged with respect to each other such that the clearance 302 between the shroud 110 and the further shroud 310 exists. The damping wire 401 is arranged within the recess 202.

As shown in Fig. 4, the further wedge face 403 of the further shroud 301 is a plane surface against which the damping wire 401 is borne and pressed. The damping wire 401 is arranged within the recess 202 in a clearance fit manner. Hence, the damping wire 401 is freely movable within the recess 202. During operation of the gas turbine, the blade 100 and the further blade device 300 are moved along the circumferential direction 104 (as indicated with the arrow of the circumferential direction 104). Due to the inertial of the damping wire 401, the damping wire 401 is pressed and borne against the further wedge surface 403. Hence, the damping wire 401 contacts the shroud 110, the further shroud 310 and hence closes and seals the clearance 302 between the two wedge faces 201, 403.

Furthermore, as shown in Fig. 4, the recess 202 comprises a radially outer surface, which is an inclining side surface 402. This inclining side surface 402 comprises a normal n which is non-parallel with the radial direction 103 and hence non-parallel with a force direction of the centrifugal force F. Hence, the damping wire 401 changes a radial distance to the rotary axis when being moved along the inclining side surface 402. Hence, under operation of the gas turbine, the rotation of the blade devices 100, 300 around the rotary axis forces the damping wire 401 to move along the inclining side surface 402 and to be pressed against the further wedge face 403.

Specifically, a circumferential inner end of the inclining side surface 402 inside the recess 202 is located closer to the rotary axis than circumferential outer end of the inclining side surface 402.

As shown in Fig. 4, the further wedge face 403 may be a plane surface in order to provide a proper contact with the damping wire 401. Alternatively, the further wedge face 403 may comprise a further recess (not shown). A further recess within the further wedge face 403 may also comprise a further inclining side surface comprising a further normal which is non-parallel with the radial direction 103. However, at the circumferential end of the further shroud, the further inclining side surface may comprise a larger distance to the rotating axis than a circumferentially inner end of the further inclining side surface within the further recess.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Blade device (100) for a gas turbine comprising a rotor shaft (101) having an axial direction (102), a radial direction (103) and a circumferential direction (104),
the blade device comprising
a shroud (110),
an airfoil (105) extending from the shroud (110) along the radial direction (103),
wherein the shroud (110) comprises at a circumferential end (111) a wedge face (201),
wherein the wedge face (201) comprises a recess (202) extending with a component along the axial direction (102), and
a damping wire (401),
wherein the damping wire (401) is arranged within the recess (202) such that the damping wire (401) is adapted for contacting the shroud (110) and a further wedge face (403) of a further shroud (310) of a further blade device (300) which is arranged adjacent to the shroud (110) along the circumferential direction (104).

2. Blade device (100) according to claim 1,
wherein the recess (202) is formed such that a press fit connection with the damping wire (401) is generated.

3. Blade device (100) according to claim 1,
wherein the recess (202) is formed such that a clearance (302) fit connection with the damping wire (401) is generated.

4. Blade device (100) according to one of the claims 1 to 3,
wherein the recess (202) comprises an inclining side surface (402) which comprises a normal (n) which is non-parallel with the radial direction (103) such that the damping wire (401) changes a radial distance to the rotary axis when being moved along the inclining side surface (402).

5. Blade device (100) according to one of the claims 1 to 4, further comprising
a blade root (106),
wherein the airfoil (105) extends along the radial direction (103) between the shroud (110) and the blade root (106), wherein the blade root (106) comprises at a blade root circumferential end a blade root wedge face (107, 108),
wherein the blade root wedge face (107, 108) of the blade root (106) is located within a blade root plane,
wherein the wedge face (201) is located within a plane (404), and
wherein the blade root plane is parallel with the plane (404).

6. Blade system for a gas turbine, the blade system comprising
a further blade device (300) comprising a further shroud (310) and a further airfoil (301) extending from the further shroud (310) along the radial direction (103),
wherein the further shroud (310) comprises at a further circumferential end a further wedge face (403), and
a blade device (100) according to one of the claims 1 to 5,
wherein the further shroud (310) is arranged adjacent to the shroud (110) along the circumferential direction (104) such that the wedge face (201) and the further wedge face (403) face each other,
wherein the damping wire (401) is arrangable within the recess (202) such that the damping wire (401) contacts the shroud (110) and the further wedge face (403) of the further shroud (310).

7. Blade system according to claim 6,
wherein blade device (100) and the further blade device (300) are arranged with respect to each other such that a clearance (302) between the shroud (110) and the further shroud (310) exits,
wherein the damping wire (401) is arranged within the recess (202) and between the shroud (110) and the further shroud (310) such that the clearance (302) is covered by the damping wire (401).

8. Blade system according to claim 6 or 7,
wherein the further wedge face (403) comprises a plane surface onto which the damping wire (401) is abuttable.

9. Blade system according to one of the claims 6 to 8, wherein the further wedge face (403) comprises a further recess,
wherein the damping wire (401) is arrangable within the recess (202) and the further recess.

10. Blade system according to one of the claims 6 to 9, wherein the wedge face (201) is located within a plane (404), wherein the plane (404) is parallel with a further plane (405) in which the adjacent further wedge face (403) of the further blade device (300) is located.

11. Blade system according to one of the claims 6 to 10, wherein the blade device (100) comprises a blade root (106) with a platform (109) which comprises at a blade root circumferential end a platform wedge face (107),
wherein the further blade device (300) comprises a further blade root with a further platform which comprises at a further blade root circumferential end a further platform wedge face,
wherein the platform wedge face (107) is located within a plane and the further platform wedge face is located within a further plane, and
wherein the plane is parallel with the further plane.

12. Blade system according to one of the claims 6 to 11, wherein the blade device (100) comprises a blade root (106) with a coupling section which comprises at a blade root circumferential end a coupling wedge face (108),
wherein the coupling section is coupleable to the shaft (101),
wherein the further blade device (300) comprises a further blade root with a further coupling section which comprises at a blade root circumferential end a further coupling wedge face,
wherein the further coupling section is coupleable to the shaft (101) adjacent in circumferential direction (104) with respect to the coupling section,
wherein the coupling wedge face (108) is located within a plane and the further platform wedge face is located within a further plane, and
wherein the plane is parallel with the further plane.

13. Method of manufacturing a blade system for a gas turbine,
wherein the gas turbine comprises a rotor shaft (101) having an axial direction (102), a radial direction (103) and a circumferential direction (104),
wherein a blade device (100) of the blade system comprises a shroud (110) and an airfoil (105) extending from the shroud (110) along the radial direction (103),
wherein the shroud (110) comprises at a circumferential end (111) a wedge face (201),
wherein the wedge face (201) comprises a recess (202) extending with a component along the axial direction (102), wherein a further blade device (300) of the blade system comprises a further shroud (310) and a further airfoil (301) extending from the further shroud (310) along the radial direction (103),
wherein the further shroud (310) comprises at a further circumferential end a further wedge face (403),
the method comprising
arranging the further shroud (310) adjacent to the shroud (110) along the circumferential direction (104) such that the wedge face (201) and the further wedge face (403) face each other, and
arranging a damping wire (401) within the recess (202) such that the damping wire (401) contacts the shroud (110) and the further wedge face (403) of the further shroud (310).
